# EUROPÄISCHE PATENTANMELDUNG

(11) **EP 4 368 586 A1**
(43) Veröffentlichungstag der Anmeldung: **15.05.2024**
(21) Anmeldenummer: 22206188.9
(22) Anmeldetag: 08.11.2022
(51) Int. Cl.: C03B 19/06, C03B 27/012, C03C 10/00

(54) **MEHRFACHFORM ZUM HERSTELLEN VON WENIGSTENS ZWEI GLASKERAMIK-ROHLINGEN FÜR DENTALE ZWECKE, VERWENDUNG EINER MEHRFACHFORM, PRESSVORRICHTUNG UND DURCHLAUFANLAGE**

(71) Anmelder: Ivoclar Vivadent AG, 9494 Schaan (LI)
(72) Erfinder: ARNOLD, Lars, 9475 Sevelen (CH); ENTNER, Walter, 6830 Rankweil (AT)
(74) Vertreter: Maiwald GmbH

(57) **Zusammenfassung**

Es wird eine Mehrfachform (42) zum Herstellen von wenigstens zwei Glaskeramik-Rohlingen beschrieben. Die Glaskeramik-Rohlinge dienen zu dentalen Zwecken und werden aus wenigstens zwei Pulver-Rohlingen mittels Heißpressen hergestellt. Die Mehrfachform (42) umfasst einen Rahmen (48), der wenigstens abschnittsweise ein Aufnahmevolumen (50) für die wenigstens zwei Pulver-Rohlinge definiert. Zudem ist ein Separierelement (52) vorgesehen, das innerhalb des Aufnahmevolumens (50) angeordnet ist und das Aufnahmevolumen (50) in wenigstens zwei Teilvolumina untergliedert, die jeweils zur Aufnahme eines der wenigstens zwei Pulver-Rohlinge ausgebildet sind. Ferner wird eine Verwendung der Mehrfachform (42) zum Herstellen eines Glaskeramik-Rohlings für dentale Zwecke vorgestellt. Außerdem werden eine Pressvorrichtung sowie eine Durchlaufanlage zum Herstellen von Glaskeramik-Rohlingen für dentale Zwecke präsentiert.

## Beschreibung

Die Erfindung betrifft eine Mehrfachform zum Herstellen von wenigstens zwei Glaskeramik-Rohlingen für dentale Zwecke aus wenigstens zwei Pulver-Rohlingen mittels Heißpressen.

Außerdem ist die Erfindung auf eine Verwendung einer Mehrfachform zum Herstellen eines Glaskeramik-Rohlings für dentale Zwecke gerichtet.

Auch betrifft die Erfindung eine Pressvorrichtung mit einer Unterdruckkammer.

Die Erfindung ist zudem auf eine Durchlaufanlage zum Herstellen von Glaskeramik-Rohlingen für dentale Zwecke gerichtet.

In diesem Zusammenhang ist es bekannt, Glaskeramik-Rohlinge in der Dentaltechnik einzusetzen. Diese eignen sich besonders gut für die Herstellung von ästhetisch anspruchsvollen Dentalrestaurationen mit sehr guten optischen und mechanischen Eigenschaften.

Die Aufgabe der Erfindung besteht darin, die Herstellung von Glaskeramik-Rohlingen weiter zu verbessern. Es soll dabei insbesondere eine Möglichkeit geschaffen werden, Glaskeramik-Rohlinge in effizienter Weise herzustellen.

Die Aufgabe wird durch eine Mehrfachform zum Herstellen von wenigstens zwei Glaskeramik-Rohlingen für dentale Zwecke gelöst. Die Glaskeramik-Rohlinge werden aus wenigstens zwei Pulver-Rohlingen mittels Heißpressen hergestellt. Die Mehrfachform umfasst einen Rahmen, der wenigstens abschnittsweise ein Aufnahmevolumen (50) für die wenigstens zwei Pulver-Rohlinge definiert. Außerdem umfasst die Mehrfachform wenigstens ein Separierelement, das innerhalb des Aufnahmevolumens angeordnet ist und das Aufnahmevolumen in wenigstens zwei Teilvolumina untergliedert, die jeweils zur Aufnahme eines der wenigstens zwei Pulver-Rohlinge ausgebildet sind. In diesem Zusammenhang ist unter einer Mehrfachform eine Form stehen, mittels der mindestens zwei Glaskeramik-Rohlinge zeitgleich hergestellt werden können. Dabei ist die Mehrfachform eine mechanisch zusammenhängende Einheit. Beispielsweise verfügt die Mehrfachform über eine einzige Matrize. Eine derartige Matrize wird also für die Herstellung der wenigstens zwei Glaskeramik-Rohlinge verwendet. Dabei ist in einer Mehrfachform eine Relativposition der Teilvolumina fest vorgegeben. Unter einem Pulver-Rohling ist dabei eine Menge an Pulver zu verstehen, aus der ein Glaskeramik-Rohling hergestellt wird. Die Menge an Pulver kann in Form eines Grünlings oder Weißlings vorliegen. Auch kann die Menge an Pulver eine einfache Pulveransammlung sein. Der Aufbau der Mehrfachform aus Rahmen und Separierelement ist strukturell einfach. Dadurch ist die Mehrfachform langlebig und robust. Es lassen sich also mit der Mehrfachform in zuverlässiger Weise zeitgleich wenigstens zwei Glaskeramik-Rohlinge herstellen. Das ist insbesondere im Vergleich zur Nutzung einer Einfachform effizient.

In einem Ausführungsbeispiel ist der Rahmen rechteckig, insbesondere quadratisch. Auch ist es möglich, dass der Rahmen rund, zum Beispiel kreisförmig ist. In allen Varianten kann der Rahmen als ringförmig bezeichnet werden. Ein derartiger Rahmen ist mechanisch stabil.

In einem Fall, in dem der Rahmen rechteckig ist, können die Separierelemente und die Teilvolumina quaderförmig sein. Im vom Rahmen definierten Aufnahmevolumen lassen sich somit in effizienter Weise Separierelemente und Teilvolumina anordnen. Das vom Rahmen definierte Aufnahmevolumen lässt sich somit gut durch Teilvolumina ausnutzen. In einem Fall, in dem der Rahmen kreisförmig ist, können selbstverständlich auch quaderförmige Separierelemente und quaderförmige Teilvolumina in dessen Innerem angeordnet sein. Hierfür ist es jedoch notwendig, Ausgleichselemente, zum Beispiel in Form von Ausgleichsplatten, zu verwenden, die die runde Form des Rahmens mit der Quaderform der Teilvolumina und Separierelemente kompatibel machen.

Ein runder Rahmen kann zudem als Spannring wirken.

Die Mehrfachform kann ferner eine Auflageplatte mit einer Auflagefläche zur direkten oder indirekten Lagerung der wenigstens zwei Pulver-Rohlinge umfassen. Eine derartige Auflageplatte kann auch als Bodenplatte bezeichnet werden. In diesem Zusammenhang wird unter einer direkten Lagerung verstanden, dass die wenigstens zwei Pulver-Rohlinge unmittelbar, d. h. ohne Zwischenelemente, die Auflageplatte kontaktieren. Bei einer indirekten Lagerung ist dementsprechend wenigstens ein Zwischenelement zwischen der Auflageplatte und den Pulver-Rohlingen angeordnet, z. B. Separierelemente. Stets wird eine einzige Auflageplatte zur gemeinsamen Lagerung der wenigstens zwei Pulver-Rohlinge verwendet. Der Aufbau der Mehrfachform ist somit weiterhin strukturell einfach. Daher ist die Mehrfachform langlebig und robust. Es lassen sich also in zuverlässiger Weise zeitgleich wenigstens zwei Glaskeramik-Rohlinge herstellen.

In einer Variante umfasst die Mehrfachform eine Heizvorrichtung zum Erwärmen wenigstens eines Abschnitts des Aufnahmevolumens. Es lassen sich also die Pulver-Rohlinge wärmebehandeln.

Dabei kann die Heizvorrichtung wenigstens zwei voneinander separate Heizsegmente zum unabhängigen Erwärmen zweier unterschiedlicher Abschnitte des Aufnahmevolumens umfassen. Diese Konfiguration hat den Vorteil, dass eine Temperaturverteilung innerhalb der Mehrfachform gezielt eingestellt werden kann. Insbesondere lässt sich auf diese Weise eine Temperaturgleichverteilung innerhalb der Mehrfachform erreichen, die engen Toleranzanforderungen genügt.

In einem Ausführungsbeispiel umfasst die Heizvorrichtung wenigstens ein Induktionsheizelement. Mittels eines derartigen Heizelements lassen sich das Aufnahmevolumen und gegebenenfalls darin positionierte Pulver-Rohlinge zuverlässig und präzise erwärmen.

Das Induktionsheizelement ist zum Beispiel als induktiver Heizring oder induktive Heizplatte ausgeführt.

In einem anderen Ausführungsbeispiel umfasst die Heizvorrichtung wenigstens ein elektrisches Widerstandsheizelement. Ein elektrisches Widerstandsheizelement erzeugt Wärme, wenn es von einem elektrischen Strom durchflossen wird. Auch mittels eines derartigen Heizelements lassen sich das Aufnahmevolumen und gegebenenfalls darin positionierte Pulver-Rohlinge präzise und zuverlässig erwärmen.

Gemäß einer Gestaltungsalternative ist das Separierelement zumindest abschnittsweise als Widerstandsheizelement ausgebildet. Das Separierelement erfüllt also zwei Funktionen. Einerseits gliedert es das Aufnahmevolumen in Teilvolumina. Andererseits dient es dem Erwärmen des Aufnahmevolumens und gegebenenfalls darin angeordneter Pulver-Rohlinge. Es versteht sich dabei, dass zu diesem Zweck das Separierelement ein elektrisch leitfähiges Material umfassen muss. Eine solche Konfiguration hat den Vorteil, dass im Inneren des Aufnahmevolumens eine Heizwirkung bereitgestellt werden kann. Dadurch lassen sich im Aufnahmevolumen angeordnete Pulver-Rohlinge effizient und zuverlässig erwärmen.

In einer Variante umfasst lediglich ein Abschnitt des Separierelements ein elektrisch leitfähiges Material. Auf diese Weise kann ein Stromflusspfad durch das Separierelement gezielt definiert werden. Dadurch kann der Ort der Wärmeerzeugung präzise festgelegt werden.

In einer Variante, in der die Mehrfachform mehrere Separierelemente umfasst, können auch nur manche Separierelemente ein elektrisch leitfähiges Material umfassen. Dementsprechend sind andere Separierelemente als elektrische Isolatoren ausgebildet. Auf diese Weise kann ein Stromflusspfad gezielt beeinflusst werden und dadurch ein Ort der Wärmeerzeugung präzise definiert werden.

Die Mehrfachform kann wenigstens zwei Widerstandsheizelemente umfassen und die wenigstens zwei Widerstandsheizelemente können unterschiedliche elektrische Widerstände aufweisen. Auf diese Weise lässt sich eine lokal erzeugte Wärmemenge oder Heizleistung einfach und zuverlässig einstellen. Dies kann dafür verwendet werden, einerseits unterschiedliche Temperaturniveaus innerhalb der Mehrfachform zu erzeugen. Andererseits ist es so möglich, eine Temperaturgleichverteilung mit hoher Präzision zu erreichen.

In diesem Zusammenhang können die unterschiedlichen elektrischen Widerstände durch unterschiedliche materialspezifische Widerstände bewirkt werden, d.h. die Widerstandsheizelemente sind aus unterschiedlichem Material. Alternativ können die unterschiedlichen Widerstände im weitesten Sinne durch unterschiedliche Geometrien der Widerstandsheizelemente bewirkt werden.

Es wird betont, dass in den Anwendungsfällen der Mehrfachform, die der Herstellung von Glaskeramik-Rohlingen für dentale Zwecke dienen, die Pulver-Rohlinge nicht elektrisch leitend sind. Die Pulver-Rohlinge sind also elektrische Isolatoren. Somit fließt durch die Pulver-Rohlinge kein Strom und sie erzeugen keine Wärme.

Gemäß einer Variante umfasst das Separierelement ein Graphitmaterial oder ist aus einem Graphitmaterial hergestellt. Das hat zwei Vorteile. Einerseits ist Graphitmaterial elektrisch leitfähig, sodass mittels des Separierelements eine Heizwirkung erzielt werden kann. Darüber hinaus hat Graphitmaterial gute Anti-Hafteigenschaften. Auf diese Weise wird verhindert, dass ein Pulver-Rohling in unerwünschter Weise am Separierelement haftet.

Ein Separierelement, das ein Graphitmaterial umfasst, kann einen Separierelementkörper aus einem metallischen oder keramischen Werkstoff umfassen, der mit dem Graphitmaterial beschichtet ist. Für den Fall, dass der Separierelementkörper aus einem keramischen Werkstoff hergestellt ist, kann dieser elektrisch leitend oder elektrisch isolierend sein. Selbstverständlich ist es auch möglich, dass das Separierelement insgesamt aus Graphitmaterial hergestellt ist.

In einem Ausführungsbeispiel ist am Rahmen eine Spannvorrichtung zum Verspannen des Separierelements und der wenigstens zwei Pulver-Rohlinge innerhalb des Aufnahmevolumens vorgesehen. Es werden so das Separierelement und die wenigstens zwei Pulver-Rohlinge während der Herstellung der Glaskeramik-Rohlinge in einer definierten Position gehalten. In einem Beispiel umfasst die Spannvorrichtung mechanische Spannelemente, zum Beispiel Schrauben, die sich relativ zum Rahmen bewegen lassen, um ein Verspannen zu bewirken. Auch ist es möglich, zum Bilden der Spannvorrichtung die thermischen Dehnungseigenschaften des Rahmens und der Separierelemente auszunutzen. Insbesondere kann in diesem Zusammenhang der Rahmen aus einem Werkstoff hergestellt sein, der nur eine vergleichsweise geringe Wärmedehnung aufweist. Insbesondere ist die Wärmedehnung des Rahmens deutlich geringer als die Wärmedehnung der Separierelemente. Wird eine derartige Mehrfachform erwärmt, findet also das gewünschte Verspannen statt. In diesem Zusammenhang ist der Rahmen zum Beispiel aus einem keramischen Werkstoff hergestellt. Auch kann der Rahmen aus einem kohlenstofffaserverstärkten Kohlenstoff hergestellt sein. Darunter wird ein Werkstoff verstanden, der eine Kohlenstoff- oder Graphitmatrix umfasst, die mit Kohlenstofffasern verstärkt ist.

Die Spannvorrichtung kann wenigstens abschnittsweise als Widerstandsheizelement ausgebildet sein. Es ist also wenigstens ein Abschnitt der Spannvorrichtung elektrisch leitfähig. Für den Fall, dass die als Widerstandsheizelement ausgebildeten Abschnitte der Spannvorrichtung direkt mit dem Pulver-Rohling in Kontakt kommen, können sie zum Beispiel aus Graphitmaterial hergestellt sein.

Innerhalb des Aufnahmevolumens und angrenzend an wenigstens einen der Pulver-Rohlinge und/oder angrenzend an das Separierelement kann eine Ausgleichsplatte vorgesehen sein. Diese Ausgleichsplatte kann dem Positionsausgleich und/oder Kraftausgleich dienen. In der ersten Alternative dient die Ausgleichsplatte also dazu, dass das Teilvolumen für die Pulver-Rohlinge präzise positioniert sind. In der zweiten Alternative geht es darum, gezielt eine Kraft, zum Beispiel eine Spannkraft in die Pulver-Rohlinge einleiten zu können.

Die Ausgleichsplatte kann wenigstens abschnittsweise als Widerstandsheizelement ausgebildet sein. Die Ausgleichsplatte wird also dafür genutzt, Wärme zu erzeugen, die der Wärmebehandlung der Pulver-Rohlinge dient. Die entsprechenden Abschnitte der Ausgleichsplatte müssen hierfür wieder elektrisch leitfähig ausgebildet sein. Zum Beispiel können diese Abschnitte aus einem Graphitmaterial hergestellt sein. Für den Fall, dass diese mit einem Pulver-Rohling in Kontakt kommen, ist dies darüber hinaus vorteilhaft, weil somit ein unerwünschtes Haften des Pulver-Rohlings an der Ausgleichsplatte vermieden wird.

In einer Ausführungsform sind entlang einer ersten Richtung, die sich von einer ersten Endfläche des Rahmens zu einer zweiten Endfläche des Rahmens erstreckt, mehrere Separierelemente und Teilvolumina alternierend angeordnet. Die erste Endfläche und die zweite Endfläche liegen einander gegenüber. Pulver-Rohlinge und Separierelemente sind also entlang einer Dimension alternierend angeordnet. Auf diese Weise lassen sich in effizienter Manier mehrere Glaskeramik-Rohlinge gleichzeitig herstellen.

Es können auch entlang einer zweiten Richtung, die senkrecht zur ersten Richtung verläuft, mehrere Separierelemente und Teilvolumina alternierend angeordnet sein. Die Teilvolumina und Separierelemente sind also in einem zweidimensionalen Muster angeordnet. Auf diese Weise lässt sich eine vergleichsweise hohe Anzahl an Glaskeramik-Rohlingen gleichzeitig herstellen.

Auch können entlang einer dritten Richtung, die senkrecht zur ersten Richtung und senkrecht zur zweiten Richtung verläuft, mehrere Separierelemente und Teilvolumina alternierend angeordnet sein. Die Separierelemente und Teilvolumina sind somit in einem sich dreidimensional erstreckenden Muster angeordnet. Die Mehrfachform ist somit dazu ausgebildet, besonders viele Glaskeramik-Rohlinge gleichzeitig herzustellen.

Zusätzlich wird die Aufgabe durch eine Verwendung einer Mehrfachform, insbesondere der erfindungsgemäßen Mehrfachform, zum Herstellen eines Glaskeramik-Rohlings für dentale Zwecke, insbesondere für eine dentale Restauration, gelöst. In diesem Zusammenhang kann der Glaskeramik-Rohling auch als dentaler Fräsrohling, dentaler CAD/CAM-Rohling oder dentaler Restaurationsrohling bezeichnet werden. Ein solcher Glaskeramik-Rohling wird zum Herstellen einer dentalen Restauration üblicherweise zunächst spanend bearbeitet, z. B. durch Fräsen und/oder Schleifen, und danach einer Wärmebehandlung unterzogen. Im Zuge der Wärmebehandlung wird der Glaskeramik-Rohlingen gehärtet, was insbesondere aufgrund von Kristallisationsvorgängen geschieht. Mittels der Mehrfachform lassen sich Glaskeramik-Rohlinge für dentale Zwecke in vergleichsweise hohen Stückzahlen herstellen. Das ist insbesondere unter Kostengesichtspunkten effizient.

Ferner wird die Aufgabe durch eine Pressvorrichtung mit einer Unterdruckkammer gelöst, wobei eine erfindungsgemäße Mehrfachform in der Unterdruckkammer der Pressvorrichtung angeordnet ist. In diesem Zusammenhang handelt es sich bei der Pressvorrichtung um eine stationäre Pressvorrichtung, in der die Mehrfachform verwendet werden kann. Neben der Unterdruckkammer kann die Presserichtung auch eine Heizeinrichtung umfassen. In diesem Fall kann die Pressvorrichtung auch als Ofen bezeichnet werden. Insgesamt lassen sich also unter Nutzung der Mehrfachform in der Pressvorrichtung zeitgleich wenigstens zwei Glaskeramik-Rohlinge herstellen. Das ist vergleichsweise effizient, insbesondere in Vergleich zu einer Pressvorrichtung, in der lediglich eine Einfachform, d. h. eine Form, mittels der lediglich ein einziger Glaskeramik-Rohling hergestellt werden kann, verwendet wird. Vorliegend kann die Pressvorrichtung in eine Anlage zur Herstellung von Glaskeramik-Rohlingen eingebunden sein. In diesem Zusammenhang kann die Pressvorrichtung innerhalb einer Unterdruckkammer angeordnet sein, die dafür sorgt, dass das Pressen in einer Unterdruck-Atmosphäre stattfindet. Unabhängig davon, ob in dieser Unterdruckkammer noch weitere Komponenten der Anlage zur Herstellung von Glaskeramik-Rohlingen angeordnet sind, wird eine derartige Unterdruckkammer als eine Unterdruckkammer der Pressvorrichtung verstanden.

Die Pressvorrichtung kann eine Auflageplatte mit einer Auflagefläche zur direkten oder indirekten Lagerung der Mehrfachform umfassen. Es lässt sich somit die Mehrfachform sicher und zuverlässig innerhalb der Pressvorrichtung lagern. Das gilt in besonderem Maße für Mehrfachformen, die ohne Auflageplatte ausgeführt sind.

Auch kann die Pressvorrichtung einen Druckstempel umfassen, welcher derart beweglich gelagert ist, dass mittels des Druckstempels im Aufnahmevolumen der Mehrfachform positionierte Objekte kraftbeaufschlagbar sind. Ein solcher Druckstempel begrenzt also das Aufnahmevolumen. Es lassen sich folglich geometrisch definierte Glaskeramik-Rohlinge herstellen. Ferner können über den Druckstempel die Pulver-Rohlinge gezielt mit einer Kraft beaufschlagt, d. h. unter mechanischen Druck gesetzt werden. Die Pressvorrichtung ist also dazu geeignet, die Pulver-Rohlinge einem Pressverfahren zu unterziehen.

Zur Herstellung der Glaskeramik-Rohlinge mittels der Pressvorrichtung können zum Beispiel die Pulver-Rohlinge zunächst auf eine Temperatur von 700 °C oder mehr erwärmt werden. Wenn diese Temperatur erreicht ist, kann eine Presskraft auf die Pulver-Rohlinge aufgebracht werden. Das Verfahren kann innerhalb der Unterdruckkammer unter reduziertem Druck, d. h. in einem technischen Vakuum, stattfinden.

Es wird betont, dass eine Pressvorrichtung mit einer Heizeinrichtung die Heizeinrichtung der Mehrfachform nicht obsolet macht. Vielmehr ergänzen sich die beiden Heizeinrichtungen dahingehend, dass die Heizeinrichtung der Mehrfachform zum Erwärmen der Pulver-Rohlinge verwendet wird und die Heizeinrichtung der Pressvorrichtung die Mehrfachform insgesamt erwärmt und so thermische Verluste reduziert oder vermeidet.

Außerdem wird die Aufgabe durch eine Durchlaufanlage zum Herstellen von Glaskeramik-Rohlingen für dentale Zwecke gelöst. Die Durchlaufanlage umfasst eine Aufheizstation, eine Pressstation und eine Abkühlstation, wobei die Aufheizstation, die Pressstation und die Abkühlstation jeweils dazu ausgebildet sind, wenigstens eine Form, insbesondere eine erfindungsgemäße Mehrfachform, aufzunehmen. Zudem umfasst die Durchlaufanlage eine Transporteinrichtung zum Transferieren der Form und/oder wenigstens eines Pulver-Rohlings von der Aufheizstation in die Pressstation und von der Pressstation in die Abkühlstation. Die Durchlaufanlage kann mit einer Einfachform, d. h. einer Form, die dazu ausgebildet ist, lediglich einen einzigen Glaskeramik-Rohling herzustellen, oder einer Mehrfachform, insbesondere einer erfindungsgemäßen Mehrfachform, betrieben werden.

In Anbetracht dessen, dass die Transporteinrichtung zum Transferieren der Form und/oder wenigstens eines Rohlings ausgebildet sein kann, ergeben sich mehrere Alternativen. In einer ersten Alternative wird mittels der Transporteinrichtung die Form von der Aufheizstation in die Pressstation und von der Pressstation in die Abkühlstation transferiert. Dabei sind in der Form einer oder mehrere Pulver-Rohlinge bzw. Glaskeramik-Rohlinge enthalten, sodass diese gemeinsam mit der Form transferiert werden. In einer zweiten Alternative ist der Pressstation wenigstens eine Form fest zugeordnet. Das bedeutet, dass der Rohling ohne Form die Aufheizstation durchläuft und in die Form der Pressstation eingesetzt werden muss. In gleicher Weise muss der Rohling nach dem Heißpressen aus der Form der Pressstation entformt werden und ohne die Form die Abkühlstation durchlaufen. Die erste Alternative kann daher auch als Durchlaufanlage mit fahrender oder durchlaufender Form bezeichnet werden, die zweite Alternative als Durchlaufanlage mit feststehender Form.

Es versteht sich, dass in der zweiten Alternative die Pulver-Rohlinge im heißen Zustand entformt werden müssen. Dazu muss die Form geöffnet werden. Ein Freischrumpfen des Rohlings und darauffolgendes Entnehmen ist nicht möglich. Das impliziert, dass in der zweiten Alternative der Rohling in allen Stationen handhabbar ist.

Darüber hinaus muss in der zweiten Alternative ein Reinigungsschritt vorgesehen sein. Auf diese Weise werden die Formen wieder vorbereitet, um einen neuen Pulver-Rohling aufzunehmen und mittels Heißpressen in einen Glaskeramik-Rohling zu überführen. Nachdem zumindest das Pressen unter Unterdruck oder Vakuum stattfindet, ist eine mechanische Reinigung der Form bevorzugt. Diese kann auch unter Vakuumbedingungen stattfinden.

Die Durchlaufanlage kann mittels eines Verfahrens zur Herstellung von Glaskeramik-Rohlingen betrieben werden, bei dem die Pulver-Rohlinge zunächst auf eine Temperatur von 700 °C oder mehr erwärmt werden, zum Beispiel in der Aufheizstation, und erst nach Erreichen dieser Temperatur mit einer Presskraft beaufschlagt werden, was beispielsweise innerhalb der Pressstation erfolgen kann. Die Temperatur von 700 °C oder mehr kann also auch in diesem Zusammenhang als Auslösekriterium für das Aufbringen einer Presskraft verwendet werden.

Nachdem das Aufheizen und Abkühlen der Form inklusive darin enthaltener Rohlinge üblicherweise länger dauert als der Pressvorgang, sind bevorzugt die Aufheizstation und die Abkühlstation dazu ausgebildet, mehr Formen mit Rohlingen aufzunehmen als die Pressstation. Auf diese Weise können die unterschiedlichen Bearbeitungszeiten der einzelnen Stationen kompensiert werden, sodass sich ein flüssiger Transfer der Formen und/oder Rohlinge durch die Durchlaufanlage ergibt. Das gilt selbstverständlich für die Variante mit fahrender Form und die Variante mit feststehender Form.

Die Aufheizstation kann wenigstens zwei ortsfeste Temperaturzonen umfassen. Alternativ oder zusätzlich kann die Abkühlstation wenigstens zwei ortsfeste Temperaturzonen umfassen. Eine Form mit darin enthaltenen Pulver-Rohlingen kann somit einem vorgegebenen Temperaturprofil unterzogen werden, indem sie die wenigstens zwei ortsfesten Temperaturzonen durchläuft. Alternativ hierzu ist es selbstverständlich auch möglich, dass die Form an einem einzigen Ort einem vorgegebenen Temperaturprofil unterzogen wird. In beiden Varianten kann die Form mit dem Pulver-Rohling in der Aufheizstation und/oder der Abkühlstation einem vorgegebenen Temperaturverlauf unterzogen werden.

Die Erfindung wird nachstehend anhand verschiedener Ausführungsbeispiele erläutert, die in den beigefügten Zeichnungen gezeigt sind. Es zeigen:
- Figur 1: eine erfindungsgemäße Durchlaufanlage gemäß einem ersten Ausführungsbeispiel, mit einer erfindungsgemäßen Pressvorrichtung, in der eine erfindungsgemäße Mehrfachform angeordnet sein kann,
- Figur 2: eine erfindungsgemäße Durchlaufanlage gemäß einem zweiten Ausführungsbeispiel, mit einer erfindungsgemäßen Pressvorrichtung, in der eine erfindungsgemäße Mehrfachform angeordnet sein kann,
- Figur 3: eine erfindungsgemäße Mehrfachform in einer perspektivischen Ansicht,
- Figur 4: die erfindungsgemäße Mehrfachform aus Figur 3 in einer Schnittdarstellung entlang der Ebene IV in Figur 3, wobei zum besseren Verständnis zusätzlich Teile einer zugeordneten, erfindungsgemäßen Pressvorrichtung dargestellt sind, und
- Figur 5: die erfindungsgemäße Mehrfachform aus den Figuren 3 und 4 in einem teilweise gefüllten Zustand.

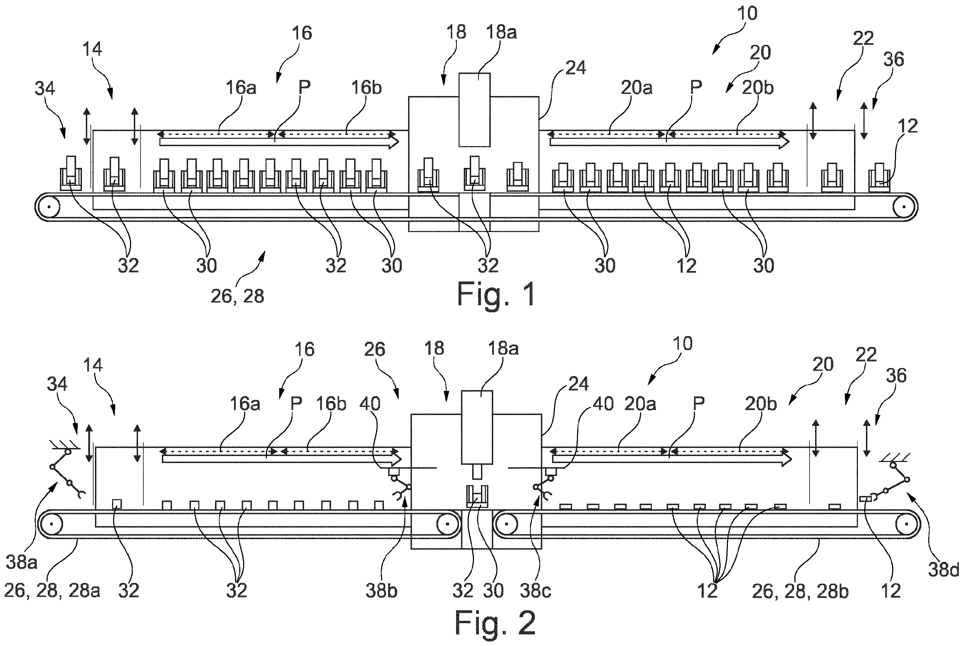

Figur 1 zeigt eine Durchlaufanlage 10 zum Herstellen von Glaskeramik-Rohlingen 12 für dentale Zwecke. Aus einem solchen Glaskeramik-Rohling 12 kann beispielsweise eine dentale Restauration hergestellt werden.

Insbesondere können aus einem derartigen Glaskeramik-Rohling 12 Kronen, Abutments, Abutmentkronen, Inlays, Onlays, Veneers, Schalen, Brücken sowie Überwürfe hergestellt werden.

Entlang einer Prozessrichtung P umfasst die Durchlaufanlage 10 eine Eingangsschleuse 14, eine Aufheizstation 16, eine Pressstation 18, eine Abkühlstation 20 und eine Ausgangsschleuse 22.

Die Aufheizstation 16, die Pressstation 18 und die Abkühlstation 20 sind innerhalb einer Unterdruckkammer 24 angeordnet.

Dementsprechend sind die Eingangsschleuse 14 und die Ausgangsschleuse 22 als Druckschleusen oder Vakuumschleusen ausgeführt.

Die Durchlaufanlage 10 umfasst darüber hinaus eine Transporteinrichtung 26, die in der dargestellten Ausführungsform ein vereinfacht dargestelltes Förderband 28 umfasst.

Dabei ist im ersten Ausführungsbeispiel gemäß Figur 1 die Transporteinrichtung 26 dazu ausgebildet, Formen 30 durch die Durchlaufanlage 10 zu transferieren, in denen zunächst jeweils ein Pulver-Rohling 32 und später, d.h. nach einem Heißpressvorgang, ein Glaskeramik-Rohling 12 positioniert ist.

Die Formen 30 mit den jeweiligen Pulver-Rohlingen 32 werden von einem Eingabebereich 34, der entlang der Prozessrichtung P vor der Eingangsschleuse 14 liegt, durch die Eingangsschleuse 14 hindurch in die Aufheizstation 16 transferiert. Danach werden die Formen 30 mit den jeweiligen Pulver-Rohlingen 32 von der Aufheizstation 16 in die Pressstation 18 transferiert.

Innerhalb der Pressstation 18 werden die Pulver-Rohlinge 32 mittels Heißpressen jeweils in einen Glaskeramik-Rohling 12 umgewandelt.

Nachfolgend werden die Formen 30 mit den jeweiligen Glaskeramik-Rohlingen 12 von der Pressstation 18 in die Abkühlstation 20 transferiert. Ausgehend von der Abkühlstation 20 werden die Formen 30 mit den jeweiligen Glaskeramik-Rohlingen 12 durch die Ausgangsschleuse 22 hindurch in einen Ausgabebereich 36 transferiert. Dort können die Formen mit den Glaskeramik-Rohlingen 12 aus der Durchlaufanlage 10 entnommen werden.

Der besseren Übersichtlichkeit wegen sind in Figur 1 nur einige der Formen 30, nur einige der Pulver-Rohlinge 32 und nur einige der Glaskeramik-Rohlinge 12 mit einem Bezugszeichen versehen.

Um einen gleichmäßigen Verlauf der Formen 30 mit den jeweiligen Pulver-Rohlingen 32 oder den jeweiligen Glaskeramik-Rohlingen 12 durch die Durchlaufanlage 10 zu gewährleisten und gleichzeitig zu berücksichtigen, dass die Formen 30 mit den jeweiligen Pulver-Rohlingen 32 bzw. Glaskeramik-Rohlingen 12 in den unterschiedlichen Stationen für unterschiedliche Zeitdauern bearbeitet werden, sind die einzelnen Stationen zur Aufnahme einer unterschiedlichen Anzahl an Formen 30 mit jeweils zugeordneten Pulver-Rohlingen 32 bzw. Glaskeramik-Rohlingen 12 ausgebildet.

Im Detail ist in der dargestellten Ausführungsform der Eingabebereich 34 dazu ausgebildet, eine einzige Form 30 mit einem zugehörigen Pulver-Rohling 32 aufzunehmen.

Auch die Eingangsschleuse 14 ist dazu ausgebildet, eine einzige Form 30 mit einem zugehörigen Pulver-Rohling 32 aufzunehmen.

Die Aufheizstation 16 ist dazu ausgebildet, insgesamt neun Formen 30 mit jeweils einem zugehörigen Pulver-Rohling 32 aufzunehmen.

Dabei weist die Aufheizstation 16 eine erste ortsfeste Temperaturzone 16a und eine zweite ortsfeste Temperaturzone 16b auf. Dabei herrscht in der ersten ortsfesten Temperaturzone 16a eine niedrigere Temperatur als in der zweiten ortsfesten Temperaturzone 16b.

Die Formen 30 mit dem jeweils zugehörigen Pulver-Rohlingen 32 werden somit beim Durchlaufen der Aufheizstation 16 in zwei Stufen aufgeheizt.

Die Pressstation 18 ist dazu ausgebildet, insgesamt drei Formen 30 aufzunehmen.

Dabei ist zu jeder Zeit lediglich eine einzige Form 30 mit zugehörigem Pulver-Rohling 32 innerhalb der Pressvorrichtung 18a angeordnet. Dort wird der Pulver-Rohling 32 in einen Glaskeramik-Rohling 12 überführt.

Eine Form 30 mit zugehörigem Pulver-Rohling 32 befindet sich innerhalb der Pressstation 18, jedoch entlang der Prozessrichtung P vor der Pressvorrichtung 18a.

Eine weitere Form 30 mit zugehörigem Glaskeramik-Rohling 12 befindet sich innerhalb der Pressstation 18, jedoch entlang der Prozessrichtung P hinter der Pressvorrichtung 18a.

Die Abkühlstation 20 ist wieder dazu ausgebildet, insgesamt neun Formen 30 mit jeweils zugehörigen Glaskeramik-Rohlingen 12 aufzunehmen.

Analog zur Aufheizstation 16 weist auch die Abkühlstation 20 eine erste ortsfeste Temperaturzone 20a und eine zweite ortsfeste Temperaturzone 20b auf. Dabei ist eine Temperatur in der zweiten ortsfesten Temperaturzone 20b geringer als in der ersten ortsfesten Temperaturzone 20a.

Figur 2 zeigt eine Durchlaufanlage 10 zum Herstellen von Glaskeramik-Rohlingen 12 für dentale Zwecke, die gemäß einem zweiten Ausführungsbeispiel ausgebildet ist. Dabei werden nachfolgend lediglich die Unterschiede gegenüber dem ersten Ausführungsbeispiel aus Figur 1 erläutert. Gleiche oder einander entsprechende Elemente sind mit denselben Bezugszeichen versehen.

Im Ausführungsbeispiel gemäß Figur 2 ist im Unterschied zum Ausführungsbeispiel gemäß Figur 1 innerhalb der Pressstation 18 die Form 30 festpositioniert. Damit ist die Form 30 auch fest innerhalb der Durchlaufanlage 10 positioniert.

Dementsprechend ist die Transporteinrichtung 26 im zweiten Ausführungsbeispiel lediglich dazu ausgebildet, Pulver-Rohlinge 32 und Glaskeramik-Rohling 12 zu transportieren, nicht jedoch Formen 30.

Daher ist in der zweiten Ausführungsform das Förderband 28 in zwei Förderbandabschnitte 28a, 28b untergliedert, wobei der Förderbandabschnitt 28a dem Eingabebereich 34, der Eingangsschleuse 14, der Aufheizstation 16 und teilweise der Pressstation 18 zugeordnet ist.

Der Förderbandabschnitt 28b ist der Abkühlstation 20, der Ausgangsschleuse 22, dem Ausgabebereich 36 und ebenfalls teilweise der Pressstation 18 zugeordnet.

Zudem umfasst die Transporteinrichtung 26 im zweiten Ausführungsbeispiel insgesamt vier Greifeinheiten 38a, 38b, 38c, 38d.

Dabei ist die Greifeinheit 38a entlang der Prozessrichtung P vor der Eingangsschleuse 14 und innerhalb des Eingabebereichs 34 positioniert.

Die Greifeinheit 38d ist entlang der Prozessrichtung P hinter der Ausgangsschleuse 22 und innerhalb des Ausgabebereich 36 angeordnet.

Die beiden Greifeinheiten 38b und 38c sind innerhalb der Unterdruckkammer 24 positioniert. Dabei ist jede der beiden Greifeinheiten 38b und 38c mit einer Linearbewegungseinheit 40 gekoppelt. Die Greifeinheiten 38b und 38c können somit mittels der jeweils zugeordneten Linearbewegungseinheit 40 innerhalb der Unterdruckkammer 24 entlang der Prozessrichtung P verfahren werden.

Dabei ist eine der Linearbewegungseinheiten 40, die mit der Greifeinheit 38b gekoppelt ist, entlang der Prozessrichtung P vor der Pressvorrichtung 18a positioniert und die andere der Linearbewegungseinheiten 40, die mit der Greifeinheit 38c gekoppelt ist, entlang der Prozessrichtung P hinter der Pressvorrichtung 18a.

Bei der Durchlaufanlage 10 gemäß Figur 2 durchlaufen die Pulver-Rohlinge 32 also den mittels der Durchlaufanlage 10 realisierten Prozess.

Dabei wird ein Pulver-Rohling 32 zunächst mittels der Greifeinheit 38a auf den Förderbandabschnitt 28a aufgesetzt und danach mittels des Förderbandabschnitts 28a in die Eingangsschleuse 14 transportiert.

Von dort wird der Pulver-Rohling 32 wie bereits im Zusammenhang mit dem ersten Ausführungsbeispiel aus Figur 1 erläutert, mittels des Förderbandabschnitts durch die Aufheizstation 16 transportiert.

Wie beim ersten Ausführungsbeispiel umfasst die Aufheizstation 16 eine erste ortsfeste Temperaturzone 16a und eine zweite ortsfeste Temperaturzone 16b. Innerhalb der Aufheizstation 16 wird der Pulver-Rohling 32 also zuerst in der ersten ortsfesten Temperaturzone 16a und nach Ablauf einer gewissen Zeit in der zweiten ortsfesten Temperaturzone 16b erhitzt.

Nachfolgend wird die Greifeinheit 38b dafür genutzt, um den Pulver-Rohling 32 in die Form 30 der Pressstation 18 und insbesondere in die Form 30 der Pressvorrichtung 18a einzusetzen. Dort wird der Pulver-Rohling 32 heißgepresst.

Darauffolgend wird er durch das Heißpressen aus dem Pulver-Rohling 32 entstandene Glaskeramik-Rohling 12 mittels der Greifeinheit 38c aus der Form 30 der Pressvorrichtung 18a entnommen und auf den Förderbandabschnitt 28b gesetzt.

Auf dem Förderbandabschnitt 28b durchläuft der Glaskeramik-Rohling 12die Abkühlstation 20, genauer gesagt die erste ortsfeste Temperaturzone 20a der Abkühlstation 20 und die zweite ortsfeste Temperaturzone 20b.

Nachdem der Glaskeramik-Rohling 12 ausreichend abgekühlt ist, wird er mittels des Förderbandabschnitts durch die Ausgangsschleuse 32 in den Ausgabebereich 36 transferiert.

Von dort aus wird der Glaskeramik-Rohling 12mittels der Greifeinheit 38d entnommen.

Es versteht sich, dass der Pulver-Rohling 32 im zweiten Ausführungsbeispiel stets handhabbar sein muss. Der Pulver-Rohling 32 ist dementsprechend beispielsweise als zusammenhängender Weißling oder Grünling vorgesehen.

Auch versteht es sich, dass die Greifeinheiten 38a, 38b, 38c, 38d lediglich schematisch dargestellt sind. Je nach Anwendungsfall können mehr oder weniger Greifeinheiten 38a, 38b, 38c, 38d vorgesehen sein.

Die Durchlaufanlage 10 wurde vorstehend im Zusammenhang mit Formen 30 erläutert, die jeweils als Einfachformen ausgebildet sind. Solche Formen sind dazu ausgebildet, stets nur einen einzigen Pulver-Rohling 32 bzw. einen einzigen Glaskeramik-Rohling 12 aufzunehmen. Anstelle der Formen 30 kann jedoch auch eine Mehrfachform 42 innerhalb der Durchlaufanlage 10 gemäß dem ersten Ausführungsbeispiel (siehe Figur 1) verwendet werden. Die obigen Ausführungen gelten in entsprechender Weise.

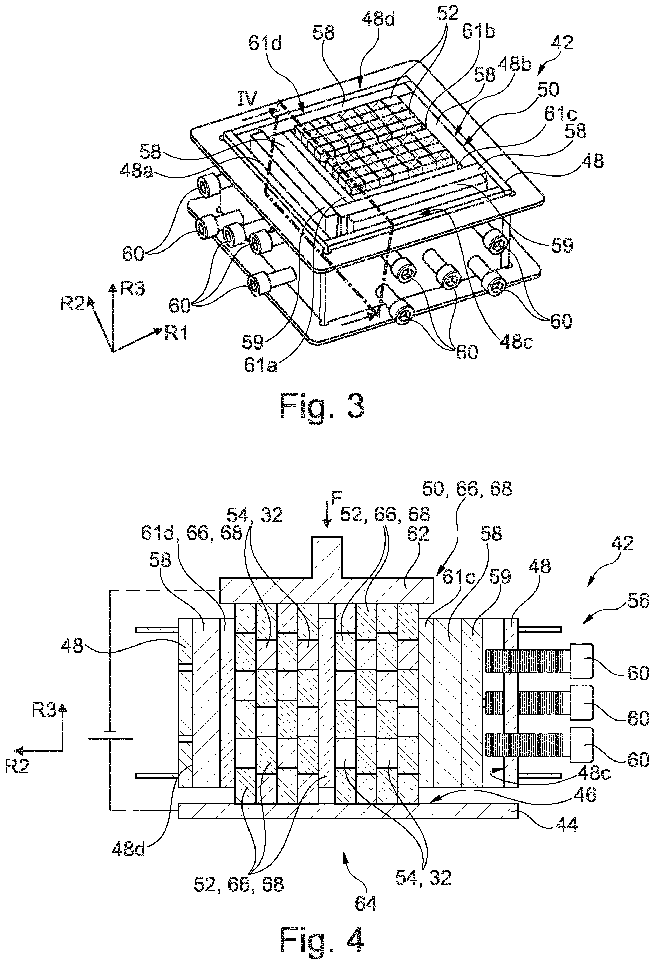

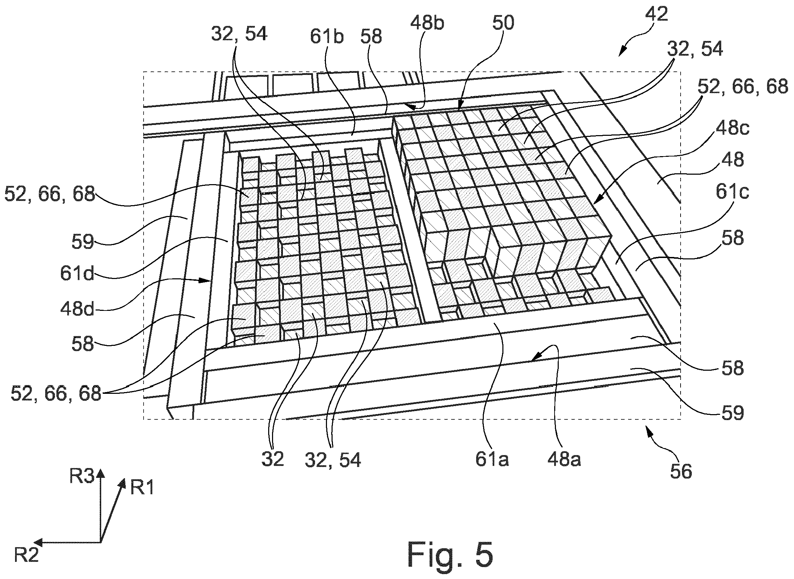

Die Mehrfachform 42 und deren Verwendung zum Herstellen eines Glaskeramik-Rohlings 12 für dentale Zwecke werden nachfolgend im Zusammenhang mit den Figuren 3 bis 5 erläutert.

Ein Glaskeramik-Rohling 12, der mittels der Mehrfachform 42 hergestellt wird, kann beispielsweise zum Herstellen einer dentalen Restauration verwendet werden.

Die Mehrfachform 42 umfasst im Beispielen aus den Figuren 3 bis 5 keine Auflageplatte.

Zum besseren Verständnis ist jedoch in der Figur 4 eine Auflageplatte 44 einer zugeordneten Pressvorrichtung 18a dargestellt, die eine Auflagefläche 46 zur Lagerung der Mehrfachform 42 und insbesondere der darin enthaltenen Pulver-Rohlinge 32 aufweist.

Ebenfalls ist in Figur 4 zum besseren Verständnis ein Druckstempel 62 der Pressvorrichtung 18a dargestellt.

Die Mehrfachform 42 umfasst einen Rahmen 48, der im dargestellten Ausführungsbeispiel einen quadratischen Querschnitt aufweist.

Dabei definiert der Rahmen 48 ein Aufnahmevolumen 50.

Die Mehrfachform 42 umfasst ferner im dargestellten Ausführungsbeispiel eine Vielzahl an Separierelementen 52. Dabei sind alle Separierelemente 52 innerhalb des Aufnahmevolumens 50 angeordnet und dazu ausgebildet, das Aufnahmevolumen 50 in mehrere Teilvolumina 54 zu untergliedern. Hierzu überlappen sich benachbarte Separierelemente 52 jeweils in ihren Randbereichen (vgl. Figur 4).

Jedes dieser Teilvolumina 54 ist dazu ausgebildet, einen Pulver-Rohling 32 aufzunehmen.

Im Ausführungsbeispiel, das in den Figuren 3 und 4 dargestellt ist, ist jedes der Teilvolumina 54 mit einem solchen Pulver-Rohling 32 gefüllt.

Das Aufnahmevolumen 50 ist somit auch ein Aufnahmevolumen 50 für die Pulver-Rohlinge 32.

Im dargestellten Ausführungsbeispiel bilden die Teilvolumina 54 und die Separierelemente 52 ein regelmäßiges, dreidimensionales Muster.

Das bedeutet, dass entlang dreier Richtungen R1, R2, R3, die den drei räumlichen Dimensionen entsprechen, mehrere Separierelemente 52 und Teilvolumina 54 bzw. darin angeordnete Pulver-Rohlinge 32 alternierend angeordnet sind.

Dabei erstreckt sich die erste Richtung R1 von einer ersten Endfläche 48a des Rahmens 48 zu einer zweiten Endfläche 48b des Rahmens 48. Die erste Endfläche und die zweite Endfläche liegen dabei einander gegenüber.

Die zweite Richtung R2 steht senkrecht auf der ersten Richtung R1 und erstreckt sich somit von einer dritten Endfläche 48c des Rahmens 48 zu einer vierten Endfläche 48 die des Rahmens 48. Dabei liegen die dritte Endfläche 48c und die vierte Endfläche 48d einander gegenüber. Ferner liegen die dritte Endfläche 48c und die vierte Endfläche 48d jeweils zwischen der ersten Endfläche 48a und der zweiten Endfläche 48b.

Die dritte Richtung R3 steht senkrecht auf der ersten Richtung R1 und der zweiten Richtung R2.

Am Rahmen 48 ist darüber hinaus eine Spannvorrichtung 56 vorgesehen. Diese ist dazu ausgebildet, die Separierelemente 52 und die Pulver-Rohlinge 32 innerhalb des Aufnahmevolumens 50 zu verspannen. Mit anderen Worten werden die Pulver-Rohlinge 32 und die Separierelemente 52 mittels der Spannvorrichtung 56 kraftschlüssig innerhalb des Rahmens 48 gehalten.

Im dargestellten Ausführungsbeispiel umfasst die Spannvorrichtung 56 insgesamt vier Spannplatten 58, zwischen denen durch Betätigung von insgesamt zehn Spannschrauben 60 die Pulver-Rohlinge 32 und die Separierelemente 52 eingeklemmt werden können.

Um den mittels der Spannschrauben 60 aufgebrachten Druck möglichst gleichmäßig in die Spannplatten 58 sowie die Separierelemente 52 und Pulver-Rohlinge 32 einleiten zu können, wirken die jeweiligen Enden der Spannschrauben 60 über zwei Druckplatten 59 auf die Spannplatten 58.

Zum selben Zweck sind zudem angrenzend an die Pulver-Rohlinge 32 und Separierelemente 52 auf jeder Seite Ausgleichsplatten 61a, 61b, 61c und 61d vorgesehen.

Während eines Heißpressvorgangs wird mittels des Druckstempels 62 der Pressvorrichtung 18a und der Auflageplatte 44 der Pressvorrichtung 18a das Aufnahmevolumen 50 begrenzt (vgl. Figur 4).

Dabei ist der Druckstempel 62 derart beweglich gelagert, das mittels des Druckstempels 62 Objekte, die im Aufnahmevolumen 50 positioniert sind, also insbesondere die Separierelemente 52 und die Pulver-Rohlinge 32 in Richtung der Aufnahmeplatte 44 mit einer Presskraft F beaufschlagt werden können.

Zu diesem Zweck ist der bereits erwähnte Überlapp zwischen Randbereichen benachbarter Separierelemente 52 so gestaltet, dass benachbarte Separierelemente 52 in der Richtung R3 aneinander abgleiten können, sodass die in den Teilvolumina 54 angeordneten Pulver-Rohlinge 32 komprimiert werden können (siehe Figur 4).

Die Separierelemente 52 wirken somit als Pressstempelelemente für die jeweils angrenzenden Teilvolumina 54.

Die Mehrfachform 42 umfasst auch eine Heizvorrichtung 64, die der besseren Übersichtlichkeit wegen lediglich in Figur 4 dargestellt ist.

Die Heizvorrichtung 64 ist dazu ausgebildet, das Aufnahmevolumen 50 und damit die dort positionierten Pulver-Rohlinge 32 zu erwärmen.

Dabei ist die Heizvorrichtung 64 im dargestellten Ausführungsbeispiel als elektrische Widerstandsheizung ausgebildet.

Sie umfasst in diesem Zusammenhang eine Mehrzahl an elektrischen Widerstandsheizelementen 66.

Dabei bilden im dargestellten Ausführungsform einige der Separierelemente 52 Widerstandsheizelemente 66. Lediglich die mit einer Kreuzschraffur versehenen Separierelemente 52 sind als elektrische Isolatoren ausgebildet.

Darüber hinaus bilden die Ausgleichsplatten 61a, 61b, 61c, 61d der Spannvorrichtung 56 elektrische Widerstandsheizelemente 66. Die Ausgleichsplatten 61a, 61b, 61c, 61d sind also elektrisch leitfähig.

In diesem Zusammenhang umfassen die Separierelemente 52 jeweils ein Graphitmaterial. Genauer gesagt sind vorliegend die elektrisch leitfähigen Separierelemente 52 aus einem Graphitmaterial hergestellt.

Somit bildet jedes der elektrisch leitfähigen Separierelemente 52 ein separates Heizsegment 68, über das jeweils angrenzende Pulver-Rohlinge 32 erwärmt werden können.

Es lässt sich somit eine Verteilung der Heizleistung innerhalb des Aufnahmevolumens 50 gezielt einstellen.

Im in Figur 4 dargestellten Beispiel wird der Stromkreis der Heizvorrichtung 64 über den Druckstempel 62 und die Auflageplatte 44 der Pressvorrichtung 18a geschlossen, die somit zumindest abschnittsweise elektrisch leitfähig sind.

Im Unterschied dazu sind die Spannplatten 58 elektrisch nicht-leitend ausgebildet. Sie dienen dazu, die Heizvorrichtung 64 von der Spannvorrichtung 56 elektrisch zu isolieren.

Der besseren Übersichtlichkeit wegen sind in Figur 4 nur einige der elektrischen Widerstandsheizelemente 66 und nur einige der Heizsegmente 68 mit einem Bezugszeichen versehen. In einer alternativen Ausführungsform, die nicht in den Figuren dargestellt ist, umfasst die Heizvorrichtung 64 wenigstens ein Induktionsheizelement. Die Heizvorrichtung 64 ist somit als Induktionsheizung ausgebildet.

Es wird bemerkt, dass die Heizvorrichtung 64 der Mehrfachform 42 eine Heizvorrichtung der Durchlaufanlage 10 in der Aufheizstation 16 nicht ersetzt, sondern ergänzt. Es werden also zur Herstellung von Glaskeramik-Rohlingen 12 sowohl die Heizvorrichtung 64 der Mehrfachform 42 als auch eine Heizvorrichtung der Aufheizstation 16 verwendet.

### Bezugszeichenliste

- 10: Durchlaufanlage
- 12: Glaskeramik-Rohling
- 14: Eingangsschleuse
- 16: Aufheizstation
- 16a: erste ortsfeste Temperaturzone der Aufheizstation
- 16b: zweite ortsfeste Temperaturzone der Aufheizstation
- 18: Pressstation
- 18a: Pressvorrichtung
- 20: Abkühlstation
- 20a: erste ortsfeste Temperaturzone der Abkühlstation
- 20b: zweite ortsfeste Temperaturzone der Abkühlstation
- 22: Ausgangsschleuse
- 24: Unterdruckkammer
- 26: Transporteinrichtung
- 28: Förderband
- 28a: Förderbandabschnitt
- 28b: Förderbandabschnitt
- 30: Form
- 32: Pulver-Rohling
- 34: Eingabebereich
- 36: Ausgabebereich
- 38a: Greifeinheit
- 38b: Greifeinheit
- 38c: Greifeinheit
- 38d: Greifeinheit
- 40: Linearbewegungseinheit
- 42: Mehrfachform
- 44: Auflageplatte
- 46: Auflagefläche
- 48: Rahmen
- 48a: erste Endfläche
- 48b: zweite Endfläche
- 48c: dritte Endfläche
- 48d: vierte Endfläche
- 50: Aufnahmevolumen
- 52: Separierelement
- 54: Teilvolumen
- 56: Spannvorrichtung
- 58: Spannplatte
- 59: Druckplatte

- 60: Spannschraube
- 61a: Ausgleichsplatte
- 61b: Ausgleichsplatte
- 61c: Ausgleichsplatte
- 61d: Ausgleichsplatte
- 62: Druckstempel
- 64: Heizvorrichtung
- 66: elektrisches Widerstandsheizelement
- 68: Heizsegment

- F: Presskraft
- P: Prozessrichtung
- R1: räumliche Dimension
- R2: räumliche Dimension
- R3: räumliche Dimension

## Patentansprüche

1. Mehrfachform (42) zum Herstellen von wenigstens zwei Glaskeramik-Rohlingen (12) für dentale Zwecke aus wenigstens zwei Pulver-Rohlingen (32) mittels Heißpressen, umfassend
einen Rahmen (48), der wenigstens abschnittsweise ein Aufnahmevolumen (50) für die wenigstens zwei Pulver-Rohlinge (32) definiert, und
wenigstens ein Separierelement (52), das innerhalb des Aufnahmevolumens (50) angeordnet ist und das Aufnahmevolumen (50) in wenigstens zwei Teilvolumina (54) untergliedert, die jeweils zur Aufnahme eines der wenigstens zwei Pulver-Rohlinge (32) ausgebildet sind.

2. Mehrfachform (42) nach Anspruch 1, umfassend eine Auflageplatte (44) mit einer Auflagefläche (46) zur direkten oder indirekten Lagerung der wenigstens zwei Pulver-Rohlinge (32).

3. Mehrfachform (42) nach einem der vorhergehenden Ansprüche, ferner umfassend eine Heizvorrichtung (64) zum Erwärmen wenigstens eines Abschnitts des Aufnahmevolumens (50).

4. Mehrfachform (42) nach Anspruch 3, wobei die Heizvorrichtung (64) wenigstens zwei voneinander separate Heizsegmente (68) zum unabhängigen Erwärmen zweier unterschiedlicher Abschnitte des Aufnahmevolumens (50) umfasst.

5. Mehrfachform (42) nach Anspruch 3 oder 4, wobei die Heizvorrichtung (64) wenigstens ein Induktionsheizelement umfasst.

6. Mehrfachform (42) nach einem der Ansprüche 3 bis 5, wobei die Heizvorrichtung (64) wenigstens ein elektrisches Widerstandsheizelement (66) umfasst.

7. Mehrfachform (42) nach Anspruch 6, wobei das Separierelement (52) zumindest abschnittsweise als Widerstandsheizelement (66) ausgebildet ist.

8. Mehrfachform (42) nach Anspruch 6 oder 7, wobei die Mehrfachform (42) wenigstens zwei Widerstandsheizelemente (66) umfasst und die wenigstens zwei Widerstandsheizelemente (66) unterschiedliche elektrische Widerstände aufweisen.

9. Mehrfachform (42) nach einem der vorhergehenden Ansprüche, wobei das Separierelement (52) ein Graphitmaterial umfasst oder aus einem Graphitmaterial hergestellt ist.

10. Mehrfachform (42) nach einem der vorhergehenden Ansprüche, wobei am Rahmen (48) eine Spannvorrichtung (56) zum Verspannen des Separierelements (52) und der wenigstens zwei Pulver-Rohlinge (32) innerhalb des Aufnahmevolumens (50) vorgesehen ist.

11. Mehrfachform (42) nach Anspruch 10 und Anspruch 6, wobei die Spannvorrichtung (56) wenigstens abschnittsweise als Widerstandsheizelement (66) ausgebildet ist.

12. Mehrfachform (42) nach einem der vorhergehenden Ansprüche, wobei innerhalb des Aufnahmevolumens (50) und angrenzend an wenigstens einen der Pulver-Rohlinge (32) und/oder angrenzend an das Separierelement (52) eine Ausgleichsplatte (61a, 61b, 61c, 61d) vorgesehen ist.

13. Mehrfachform (42) nach Anspruch 12 und Anspruch 6, wobei die Ausgleichsplatte (61a, 61b, 61c, 61d) wenigstens abschnittsweise als Widerstandsheizelement (66) ausgebildet ist.

14. Mehrfachform (42) nach einem der vorhergehenden Ansprüche, wobei entlang einer ersten Richtung (R1), die sich von einer ersten Endfläche (48a) des Rahmens (48) zu einer zweiten Endfläche (48b) des Rahmens (48) erstreckt, wobei sich die erste Endfläche (48a) und die zweite Endfläche (48b) gegenüberliegen, mehrere Separierelemente (52) und Teilvolumina (54) alternierend angeordnet sind.

15. Mehrfachform (42) nach Anspruch 14, wobei entlang einer zweiten Richtung (R2), die senkrecht zur ersten Richtung (R1) verläuft, mehrere Separierelemente (52) und Teilvolumina (54) alternierend angeordnet sind.

16. Mehrfachform (42) nach Anspruch 15, wobei entlang einer dritten Richtung (R3), die senkrecht zur ersten Richtung (R1) und senkrecht zur zweiten Richtung (R2) verläuft, mehrere Separierelemente (52) und Teilvolumina (54) alternierend angeordnet sind.

17. Verwendung einer Mehrfachform (42) nach einem der vorhergehenden Ansprüche zum Herstellen eines Glaskeramik-Rohlings (12) für dentale Zwecke, insbesondere für eine dentale Restauration.

18. Pressvorrichtung (18a) mit einer Unterdruckkammer (24), wobei eine Mehrfachform (42) nach einem der Ansprüche 1 bis 16 in der Unterdruckkammer (24) der Pressvorrichtung (18a) angeordnet ist.

19. Durchlaufanlage (10) zum Herstellen von Glaskeramik-Rohlingen (12) für dentale Zwecke,
mit einer Aufheizstation (16), einer Pressstation (18) und einer Abkühlstation (20), wobei die Aufheizstation (16), die Pressstation (18) und die Abkühlstation (20) jeweils dazu ausgebildet sind, wenigstens eine Form (30), insbesondere eine Mehrfachform (42) nach einem der Ansprüche 1 bis 16, aufzunehmen und
mit einer Transporteinrichtung (26) zum Transferieren der Form (30) und/oder wenigstens eines Pulver-Rohlings (32) von der Aufheizstation (16) in die Pressstation (18) und von der Pressstation (18) in die Abkühlstation (20).

20. Durchlaufanlage (10) nach Anspruch 19, wobei die Aufheizstation (16) wenigstens zwei ortsfeste Temperaturzonen (16a, 16b) umfasst und/oder wobei die Abkühlstation (20) wenigstens zwei ortsfeste Temperaturzonen (20a, 20b) umfasst.
